# EUROPEAN PATENT SPECIFICATION

(11) **EP 0 510 638 B1**
(45) Date of publication and mention of the grant of the patent: **11.10.1995**
(21) Application number: 92106943.1
(22) Date of filing: 23.04.1992
(51) Int. Cl.: C08J 7/12, B29C 59/10, C08G 73/10, C08L 79/08

(54) **Silicon-modified polyimide film and process for producing same**
Silicon-modifizierter Polyimidfilm und Verfahren zu seiner Herstellung
Film de polyimide modifié par du silicium et procédés pour leur préparation

(30) Priority: 23.04.1991 JP 117858/91
(43) Date of publication of application: 28.10.1992
(73) Proprietor: CHISSO CORPORATION, Osaka-shi Osaka (JP)
(72) Inventor: Ono, Fumihiro, Ichibara-shi, Chiba (JP); Kikuta, Kazutsune, Ichibara-shi, Chiba (JP)
(74) Representative: Hansen, Bernd, Dr. Dipl.-Chem.

(56) References cited:
- EP-A- 0 258 859
- EP-A- 0 370 723
- GB-A- 2 203 095
- US-A- 3 485 734

## Description

The present invention relates to a silicone-modified polyimide having improved adhesive properties.

A polyimide film has excellent characteristics in points of heat resistance, cold resistance, chemical resistance, electrical insulating properties and mechanical strength, for instance, and it is widely utilized as an electrical insulating film, a heat-resistant film, a base film for a flexible print circuit, for instance. In recent years, in order to improve the adhesion to a silicone wafer or a glass substrate, and in order to improve the solubility of a solvent to a polyimide, flexural modulus and tensile shear strength, some silicone-modified polyimides have been developed and put into practice.

However, films of the silicone-modified polyimides are poor in adhesive properties to an adhesive, and therefore these films have the drawback that they cannot be used in applications in which high adhesive properties are required.

As techniques for eliminating this drawback, there have been suggested a sand blast treatment, an alkali treatment and the adding of an inorganic filler to the polyimide film. For example, in the preparation of mats by the sand blast treatment which is a known technique (e.g., Japanese Patent Publication No. 38-11838), both the edges of the film are easily damaged, and therefore both the edges of the film must be slit after the preparation of the mats. Owing to this film loss, the cost of the film increases inconveniently. Furthermore, in the case of the sand blast treatment, grains are hit against the polyimide film, and thus fine cracks occur in the polyimide film and some of these cracks reach the opposite surface, so that electrical resistance deteriorates inconveniently.

Moreover, in the alkali treatment, a highly concentrated alkali solution is used, and therefore washing and drying are necessary as after-treatments. Thus, the alkali treatment is unsatisfactory in points of safety, operability and productivity. In the technique comprising the step of adding the inorganic filler to improve the adhesive properties (e.g., Japanese Patent Application Laid-open No. 68852/1987), there is the problem that the physical properties of the polyimide itself are impaired owing to the inorganic filler which is added to the film.

An object of the present invention is to provide a silicone-modified polyimide film having improved adhesive properties, and another object is to provide a process for producing the same.

In view of such situations, the present inventors have intensively researched and solved these technical problems by providing a silicone-modified polyimide film having improved adhesive properties and comprising a silicone-modified polyimide, or a composite of the silicone-modified polyimide and an aromatic polyimide, wherein said silicone-modified polyimide comprises 0 to 90 mol% of a structural unit represented by the formula (1a) 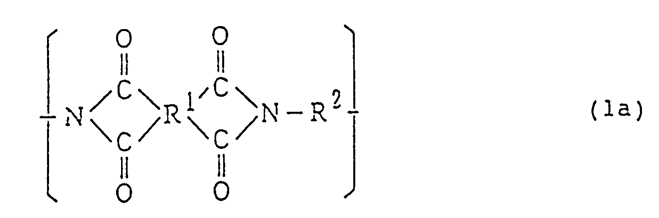
and 10 to 100 mol% of a structural unit represented by the formula (1b) 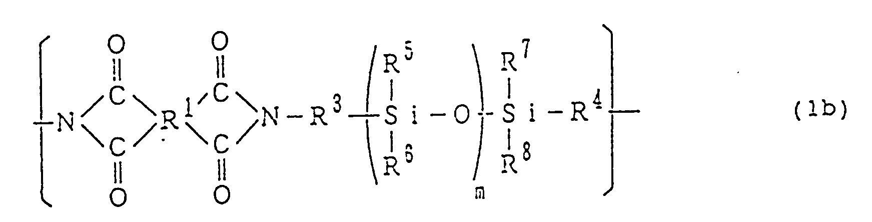
(wherein R¹ is an organic group such as a tetravalent carbon cyclic aromatic group or a heterocyclic group; R² is a divalent organic group such as an aliphatic group of two or more carbon atoms , an alicyclic group, a carbon cyclic aromatic group, a heterocyclic group or a polysiloxane group; R¹ or R² may be substituted by a halogen atom or one or more alkylene groups having 1 to 4 carbon atoms; R³ and R⁴ may be identical or different, and each of them is an alkylene group having 1 to 6 carbon atoms or a phenylene group; R⁵, R⁶, R⁷ and R⁸ may be identical or different and each of them is an alkyl group having 1 to 6 carbon atoms, an alkoxy group having 1 to 6 carbon atoms, a phenyl group or a phenoxy group; and m is an integer of 1 to 100), wherein the ratio of the absorbance N₁ of the absorption spectrum of the film surface layer at 1074 cm⁻¹ on the basis of Si-O to the absorbance N₂ of the absorption spectrum at 824 cm⁻¹ on the basis of a benzene ring in an infrared absorption spectrum of the film surface is 0.7 or less and a process for its production as defined in claim 2.

By the process according to the present invention the silicone-modified polyimide film having improved adhesive properties can be successfully obtained by subjecting a specific silicone-modified polyimide film to a specific corona discharge treatment. In consequence, the silicone-modified polyimide film having improved adhesive properties of the present invention and the process for producing the same have been completed.

The silicone-modified polyimide film having improved adhesive properties of the present invention comprises a polyimide film comprising a silicone-modified polyimide or a composite of the silicone-modified polyimide and an aromatic polyimide, and it is characterized in that an absorbance ratio N₁/N₂ (an absorbance at 1074 cm⁻¹/an absorbance at 824 cm⁻¹) in an infrared absorption spectrum of the film surface is 0.7 or less.

The process for producing the silicone-modified polyimide film having improved adhesive properties of the present invention comprises the step of subjecting a polyimide film comprising a silicone-modified polyimide or a composite of the silicone-modified polyimide and a aromatic polyimide to a corona discharge treatment of 2500 to 87000 W. min./m².

### BRIEF DESCRIPTION OF THE DRAWINGS

Fig. 1 shows an infrared absorption spectrum of a silicone-modified polyimide film (which has been subjected to a corona treatment), and
Fig. 2 shows an infrared absorption spectrum of a silicone-modified polyimide film (which has not been subjected to the corona treatment).

In these drawings, N₁ is an absorbance at 1074 cm⁻¹, and N₂ is an absorbance at 824 cm⁻¹.

### DETAILED DESCRIPTION OF PREFERRED EMBODIMENT

An absorbance ratio N₁/N₂ (an absorbance at 1074 cm⁻¹/an absorbance at 824 cm⁻¹) in an infrared absorption spectrum of the film surface of a silicone-modified polyimide film regarding the present invention means a ratio of the absorbance N₁ of the absorption spectrum of the film surface layer at 1074 cm⁻¹ on the basis of Si-O to the absorbance N₂ of the absorption spectrum at 824 cm⁻¹ on the basis of a benzene ring.

The above-mentioned absorbance ratio N₁/N₂ of the silicone-modified polyimide film of the present invention is required to be 0.7 or less. When N₁/N₂ is in excess of 0.7, adhesive properties are lost, and a product obtained under such conditions is not the silicone-modified polyimide film of the present invention any more.

The conditions of the corona discharge treatment in the process of the present invention are from 2500 to 8700 W. min./m², preferably 5700 to 18000 W. min./m².

Under treatment conditions of less than 2500 W. min./m², it is difficult to stably obtain sufficient adhesive strength. Conversely, under treatment conditions of 87000 W. min./m² or more, a blocking phenomenon occurs in which organic decomposition products precipitate probably owing to the corona discharge treatment, and the mechanical strength of the film is badly affected. In consequence, the utilization of the corona discharge treatment can scarcely be considered to be practical.

The polyimide film of the present invention comprising the silicone-modified polyimide or a composite of the silicone-modified polyimide and an aromatic polyimide can be obtained by applying a silicone-modified polyimide precursor solution as a coating solution on a substrate such as a glass plate, a copper plate, an aluminum plate, a glass foil, a copper foil, an aluminum foil or a silicone wafer; removing a solvent at about 140°C; and then carrying out imidation at about 200 to 400°C. Furthermore, the polyimide film can be also obtained by casting the coating solution on a PET film; drying it at 140°C; peeling off the polyimide precursor film; setting the film in a metallic frame; elevating the temperature of the film from 140°C to 350°C over about 1 hour; and then calcining it at 350°C-400°C.

Examples of the solvent for the coating solution include N-methyl-2-pyrrolidone, N,N-dimethylacetamide, N,N-dimethylformamide, dimethyl sulfoxide, tetrametylurea, pyridine, hexamethyl phosphoramide, methylformamide, N-acetyl-2-pyrrolidone, 2-methoxyethanol, 2-ethoxyethanol, 2-butoxyethanol, diethylene glycol monomethyl ether, diethylene glycol monoethyl ether, diethylene glycol monobutyl ether, cyclopentanone, cyclohexanone, cresol, Υ-butyrolactone, isophorone, N,N-diethylacetamide, N,N-diethylformamide, N,N-dimethylmethoxyacetamide, tetrahydrofuran, N-acetyl-2-pyrrolidone, N-methyl-ε-caprolactam and tetrahydrothiophene dioxide (sulpholane). The above-mentioned organic solvents can be used in the form of a mixed solvent of two or more thereof. Moreover, the above-mentioned organic solvent, when used, can be diluted with another aprotic (neutral) organic solvent, for example, an aromatic, alicyclic or aliphatic hydrocarbon or its chlorinated derivative (e.g., benzene, toluene, xylene, cyclohexane, pentane, hexane, petroleum ether or methylene chloride), or dioxane.

No particular restriction is put on the thickness of the silicone-modified polyimide film of the present invention, but the lower limit of the film thickness is 10 µm, preferably 25 µm, and the upper limit thereof is 175 µm, preferably 150 µm. The process for producing the silicone-modified polyimide film is not limited to a process using an imidating agent (a chemical cure method) or a process only comprising a heating step (a dry up method).

In the silicone-modified polyimide film and its process according to the present invention, the applicable silicone-modified polyimide film is a silicone-modified polyimide containing an aromatic tetracarboxylic dianhydride, a diaminosiloxane and an aromatic diamine as the main components, and it may be the silicone-modified polyimide alone or a mixture of the silicone-modified polyimide and a polyimide.

This silicone-modified polyimide comprises 0 to 90 mol% of a structural unit represented by the formula (1a) 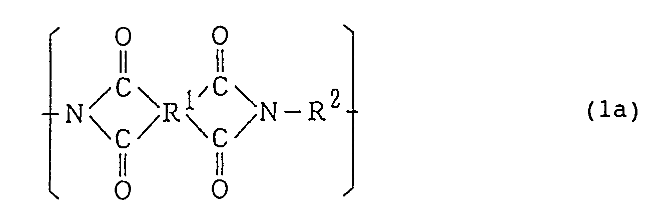
and 10 to 100 mol% of a structural unit represented by the formula (1b) 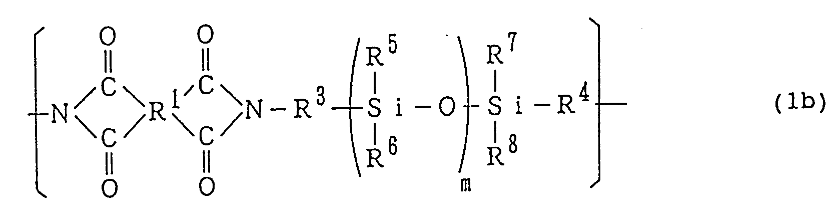
(wherein R¹ is an organic group such as a tetravalent carbon cyclic aromatic group or a heterocyclic group; R² is a divalent organic group such as an aliphatic group of two or more carbon atoms , an alicyclic group, a carbon cyclic aromatic group, a heterocyclic group or a polysiloxane group; R¹ or R² may be substituted by a halogen atom (e.g., fluorine, chlorine or bromine) or one or more alkylene groups having 1 to 4 carbon atoms; R³ and R⁴ may be identical or different, and each of them is an alkylene group having 1 to 6 carbon atoms or a phenylene group; R⁵, R⁶, R⁷ and R⁸ may be identical or different and each of them is a lower alkyl group having 1 to 6 carbon atoms, a lower alkoxy group having 1 to 6 carbon atoms, a phenyl group or a phenoxy group; and m is an integer of 1 to 100).

The silicone-modified polyimide for use in the film of the present invention can be obtained by reacting a polyimide precursor comprising 0 to 90 mol% of a structural unit represented by the formula (2a) 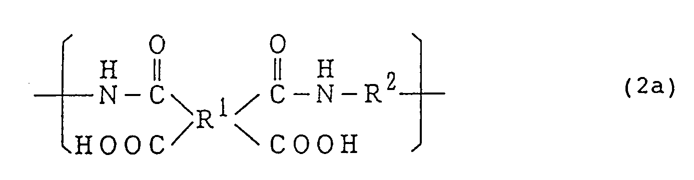
and 10 to 100 mol% of a structural unit represented by the formula (2b) 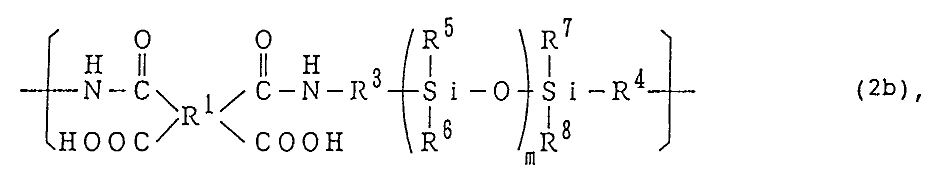
a tetracarboxylic dianhydride represented by the formula (3) 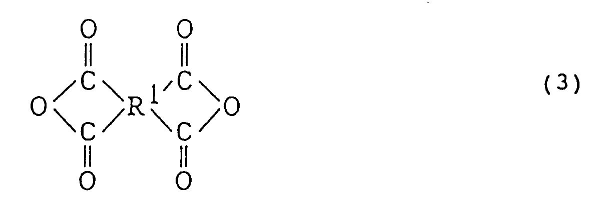
a diamine represented by the formula (4)

H₂N-R²-NH₂ (4)

and an α,ω̅-diaminosiloxane represented by the formula (5) 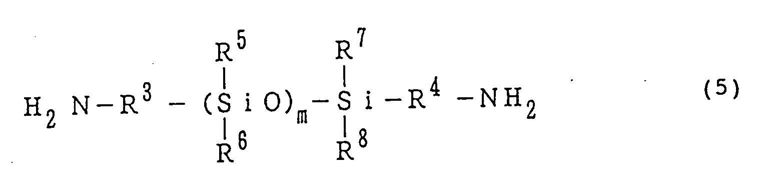
in an organic solvent.

In the above-mentioned formulae 2 to 5, R¹, R², R³, R⁴, R⁵, R⁶, R⁷ and R⁸ are as defined above.

Examples of the above-mentioned lower alkylene group having 1 to 6 carbon atoms include methylene, ethylene, trimethylene, tetramethylene, pentamethylene and hexamethylene groups. Examples of the lower alkyl group having 1 to 6 carbon atoms include methyl, ethyl, propyl, isopropylbutyl, isobutyl, tert-butyl, pentyl and hexyl groups. Examples of the lower alkoxy groups having 1 to 6 carbon atoms include methoxy, ethoxy, propoxy, isopropoxy, butoxy, isobutoxy, tertbutoxy, pentyloxy and hexyloxy groups.

Typical examples of the tetracarboxylic dianhydride represented by the formula 3 include pyromellitic dianhydride, benzene-1,2,3,4-tetracarboxylic dianhydride, 2,2',3,3'-benzophenonetetracarboxylic dianhydride, 2,3,3',4'-benzophenonetetracarboxylic dianhydride, 3,3',4,4'-benzophenonetetracarboxylic dianhydride, 2,2',3,3'-biphenyltetracarboxylic dianhydride, 3,3',4,4'-biphenyltetracarboxylic dianhydride, 2,3,3',4'-biphenyltetracarboxylic dianhydride, 2,3,6,7-naphthalenetetracarboxylic dianhydride, 3,4,9,10-perylenetetracarboxylic dianhydride, 2,3,6,7-anthracenetetracarboxylic dianhydride, 1,2,7,8-phenanthrenetetracarboxylic dianhydride, bis(2,3-dicarboxyphenyl)methane dianhydride, bis(3,4-dicarboxyphenyl)methane dianhydride, 1,2,5,6-naphthalenetetracarboxylic dianhydride, 2,2-bis(2,3-dicarboxyphenyl)propane dianhydride, 2,2-bis(3,4-dicarboxyphenyl)propane dianhydride, 1,1-bis(2,3-dicarboxyphenyl)ethane dianhydride, bis(3,4-dicarboxyphenyl)sulfone dianhydride, bis(3,4-dicarboxyphenyl) ether dianhydride, 3,3',4,4'-tetracarboxybenzoyloxybenzene dianhydride, N,N-(3,4-dicarboxyphenyl)N-methylamine dianhydride, thiophene-2,3,4,5-tetracarboxylic dianhydride, pyrazine-2,3,5,6-tetracarboxylic dianhydride, pyridine-2,3,5,6-tetracarboxylic dianhydride, 1,2,3,4-butanetetracarboxylic dianhydride, pentanetetracarboxylic dianhydride, 1,2,3,4-cyclopentanetetracarboxylic dianhydride, 1,2,3,4-bicyclohexenetetracarboxylic dianhydride, 1,2,3,4-tetrahydrofurantetracarboxylic dianhydride, 1,2,3,4-cyclobutanetetracarboxylic dianhydride and 2,3,5-tricarboxycyclopentylacetic dianhydride. These acid dianhydrides can be used singly or in combination.

Examples of the diamine compound represented by the formula (4) include carbon cyclic diamines, heterocyclic diamines, aliphatic diamines, alicyclic diamines and aromatic aliphatic diamines.

Examples of the carbon cyclic aromatic diamine include o-, m- and p-phenylenediamines, diaminotoluenes (e.g., 2,4-diaminotoluene), 1,4-diamino-2-methoxybenzene, 2,5-diaminoxylenes, 1,3-diamino-4-chlorobenzene, 1,4-diamino-2,5-dichlorobenzene, 1,4-diamino-2-bromobenzene, 1,3-diamino-4-isopropylbezene, N,N-diphenyl-1,4-phenylenediamine, 4,4'-diaminophenyl-2,2-propane, 4,4'-diaminophenylmethane, 2,2-diaminostilbene, 4,4'-diaminostilbene, 4,4'-diaminophenyl ether, 4,4'-diaminophenyl thioether, 4,4'-diaminodiphenylsulfone, 3,3'-diaminodiphenylsulfone, 4,4'-diaminobenzoic acid phenylester, 2,2'-diaminobenzophenone, 4,4'-diaminobenzophenone, 4,4'-diaminobenzyl, 4-(4'-aminophenylcarbamoyl)aniline, bis(4-aminophenyl)phosphine oxide, bis(4-aminophenyl)methylphosphine oxide, bis(3-aminophenyl)methylsulfine oxide, bis(4-aminophenyl)phenylphosphine oxide, bis(4-aminophenyl)cyclohexylphosphine oxide, N,N-bis(4-aminophenyl)-N-phenylamine, N,N-bis(4-aminophenyl)-N-methylamine, 4,4'-diaminodiphenylurea, 1,8-diaminaphthalene, 1,5-diaminonaphthalene, 1,5-diaminoanthraquinone and diaminofluoranthene.

Examples of the heterocyclic diamines include 2,6-diaminopyridine, 2,4-diaminopyridine, 2,4-diamino-s-triazine, 2,7-diaminodibenzofuran, 2,7-diaminocarbazole, 3,7-diaminophenothiazine and 2,5-diamino-1,3,4-thiaziazole.

Examples of the aliphatic diamine include dimethylenediamine, trimethylenediamine, tetramethylenediamine, hexamethylenediamine, heptamethylenediamine, octamethylenediamine, nonamethylenediamine, decamethylenediamine, 2,2-dimethylpropylenediamine, 2,5-dimethylhexamethylenediamine, 2,5-dimethylheptamethylenediamine, 4,4-dimethylheptamethylenediamine, 3-methoxyhexamethylenediamine, 5-methylnonamethylenediamine, 2,11-diaminododecane, 1,12-diaminooctadecane, 1,2-bis(3-aminopropoxy)ethane, N,N-dimethyl-ethylenediamine, N,N'-diethyl-1,3-diaminopropane and N,N'-dimethyl-1,6-diaminohexane. Furthermore, additional examples of the aliphatic diamine include diamines represented by the formula H₂N(CH₂)₃O(CH₂)₂O(CH₂)₃NH₂ and diamines represented by the formula H₂N(CH₂)₃S(CH₂)₃NH₂.

Examples of the alicyclic diamine include 1,4-diaminocyclohexane and 4,4'-diamino-dicyclohexylmethane, and desirable examples of the aromatic aliphatic diamine include 1,4-bis(2-methyl-4-aminopentyl)benzene, 1,4-bis(1,1-dimethyl-5-aminopentyl)benzene, 1,3-bis(aminomethyl)benzene and 1,4-bis(aminomethyl)benzene. These diamines can be used singly or in combination.

Examples of the α,ω̅-diaminosiloxane represented by the formula (5) include 1,1,3,3-tetramethyl-1,3-bis(4-aminophenyl)disiloxane, 1,1,3,3-tetraphenoxy-1,3-bis(4-amonoethyl)disiloxane, 1,1,3,3,5,5-hexamethyl-1,5-bis(4-aminophenyl)trisiloxane, 1,1,3,3-tetraphenyl-1,3-bis(2-aminoethyl)disiloxane, 1,1,3,3-tetraphenyl-1,3-bis(3-aminopropyl)disiloxane, 1,1,5,5-tetraphenyl-3,3-dimethyl-1,5-bis(3-aminopropyl)trisiloxane, 1,1,5,5-tetraphenyl-3,3-dimethoxy-1,5-bis(aminobutyl)trisiloxane, 1,1,5,5-tetraphenyl-3,3-dimethoxy-1,5-bis(5-aminopentyl)trisiloxane, 1,1,3,3-tetramethyl-1,3-bis(2-aminoethyl)disiloxane, 1,1,3,3-tetramethyl-1,3-bis(3-aminopropyl)disiloxane, 1,1,3,3-tetramethyl-1,3-bis(4-aminobutyl)disiloxane, 1,3-dimethyl-1,3-dimethoxy-1,3-bis(4-aminobutyl)disoloxane, 1,1,5,5-tetramethyl-3,3-dimethoxy-1,5-bis(2-aminoethyl)trisiloxane, 1,1,5,5-tetramethyl-3,3-dimethoxy-1,5-bis(3-aminopropyl)trisiloxane, 1,1,5,5-tetramethyl-3,3-dimethoxy-1,5-bis(4-aminobutyl)trisiloxane, 1,1,5,5-tetramethyl-3,3-dimethoxy-1,5-bis(5-aminopentyl)trisiloxane, 1,1,3,3,5,5-hexamethyl-1,5-bis(3-aminopropyl)trisiloxane, 1,1,3,3,5,5-hexamethyl-1,5-bis(3-aminopropyl)trisiloxane and 1,1,3,3,5,5-hexapropyl-1,5-bis(3-aminopropyl)trisiloxane. They can be used singly or in combination.

The silicone-modified polyimide film of the present invention has much more excellent adhesive properties as compared with a conventional film. That is, with regard to the conventional silicone-modified polyimide film, it can be considered that a layer having a high siloxane content is formed on the surface of the film and deteriorates the adhesive properties. According to the present invention, the contact angle of the film surface is decreased by a corona discharge treatment and an oxygen group is introduced, so that polar groups increase and the concentrated siloxane layer is removed from the surface of the film to expose the surface effective for the adhesion. In consequence, the good adhesive properties can be obtained all over the film.

The silicone-modified polyimide film of the present invention is much more excellent in adhesive properties (peeling strength) as compared with the conventional film.

Furthermore, according to the process of the present invention, the specific corona discharge treatment is applied to the conventional silicone-modified polyimide film, thereby easily providing the silicone-modified polyimide film having improved adhesive properties.

### EXAMPLES

Now, the present invention will be described in reference to examples and comparative examples, but it should not be limited to these examples.

Reference will be made to the preparation of a silicone-modified polyimide precursor which will be used in the examples, the preparation of a silicone-modified polyimide film, and the measurement of adhesive strength and absorbance ratios N₁/N₂ of the films.

Preparation of the silicone-modified polyimide precursor:
While a nitrogen gas was blown into a three-necked flask equipped with a thermometer, a stirrer and a nitrogen blowing orifice, 0.1 mol of paraphenylenediamine (hereinafter abbreviated to "p-PDA") as a diamine, 0.1 mol of 1,1,3,3,5,5-hexamethyl-1,5-bis(3-aminopropyl)trisiloxane as an α,ω̅-diaminosiloxane and 400 g of N,N-dimethylacetamide as a solvent were placed in the flask. The mixture was then cooled to 20°C, and 400 g of 3,3,4,4-biphenyltetracarboxylic dianhydride (hereinafter abbreviated to "s-BPDA") were slowly added thereto as an acid anhydride with stirring. Polymerization reaction was carried out for 6 hours to obtain a polyimide precursor having a solid concentration of 15% by weight. The viscosity of this polyimide precursor solution was 25000 mPa·s (cps).

### Preparation of the silicone-modified polyimide film:

The thus obtained polyimide precursor was cast and applied on a PET film so that the thickness of the film might be 25 µm, and it was then dried at 140°C for 10 minutes in an oven. Afterwards, the resultant self-supporting polyimide precursor film was peeled off and then set in a metallic frame. Next, the film was heated from 140°C to 350°C over 1 hour and then calcined at 350°C for 30 minutes to achieve imidation, thereby obtaining a silicone-modified polyimide film.

### Measurement of the adhesive properties (peeling strength):

Pyralux made by Du Pont was thermally pressed against a silicone-modified polyimide at a temperature of 180°C under a pressure of 4 MPa (40 kg cm²) for 1 hour, and the peeling strength was then measured in a sample width of 10 mm at a peeling angle of 180°C at a peeling velocity of 50 mm/minute.

### Measurement of the absorbance ratio in an infrared absorption spectrum:

An absorbance (N₁) at 1074 cm⁻¹ and an absorbance (N₂) at 824 cm⁻¹ were measured from the chart of an infrared absorption spectrum of each film, and the N₁/N₂ ratio was then calculated.

### Examples 1 to 3

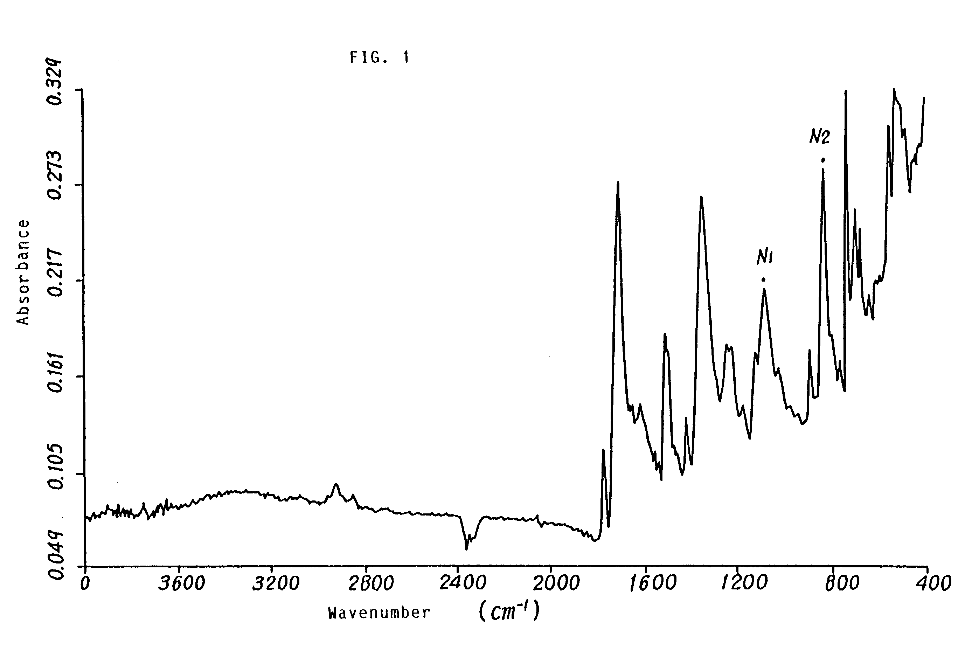

Silicone-modified polyimide films were subjected to a corona treatment under various conditions in the range of 8050 to 68400 W. min./m² by the use of an HFS-400F-1 type corona surface treatment device (oscillation frequency 15 KHz and high-frequency output 4 KW) made by Kasuga Denki Co., Ltd. For these films, the increase of N₁/N₂ on the film surfaces, adhesive strength and the like were measured. The results are set forth in Table 1 (the infrared absorption spectrum for the calculation of the N₁/N₂ in Example 2 is shown in Fig. 1).

### Comparative Example 1

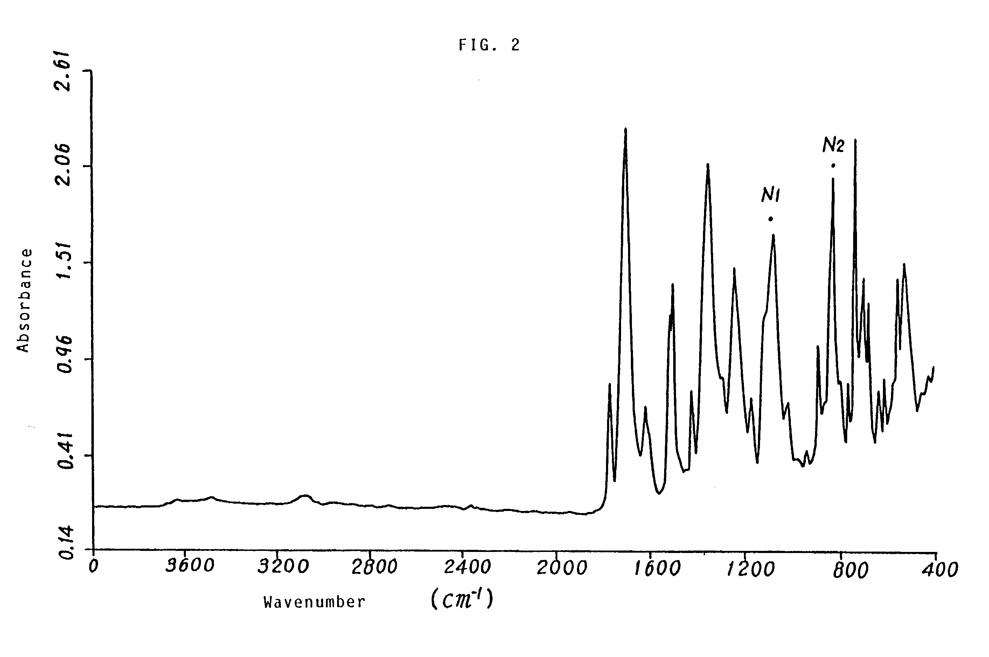

A silicone-modified polyimide film having a thickness of 25 µm was not subjected to a corona surface treatment, and N₁/N₂ and adhesive strength were inspected. The results are set forth in Table 1 (the infrared absorption spectrum for the calculation of the N₁/N₂ is shown in Fig. 2).

**Table 1**

| Example Item | Example | | | Comp. |
|---|---|---|---|---|
| | 1 | 2 | 3 | 1 |
| Film Thickness (µm) | 25 | 25 | 25 | 25 |
| Corona Treatment Conditions (W.min./m²) | 17100 | 8050 | 4780 | 0 |
| Peeling Strength (kgf/cm) | 3.5 | 1.8 | 1.5 | 0.3 |
| N₁/N₂* | 0.59 | 0.65 | 0.70 | 0.83 |

| | | | | |
|---|---|---|---|---|
| * A reflectance ratio in an infrared absorption spectrum. | | | | |

## Claims

1. A silicone-modified polyimide film having improved adhesive properties and comprising a silicone-modified polyimide, or a composite of the silicone-modified polyimide and an aromatic polyimide, wherein said silicone-modified polyimide comprises 0 to 90 mol% of a structural unit represented by the formula (1a) 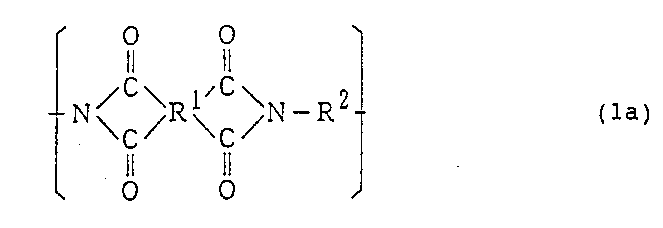 and 10 to 100 mol% of a structural unit represented by the formula (1b) 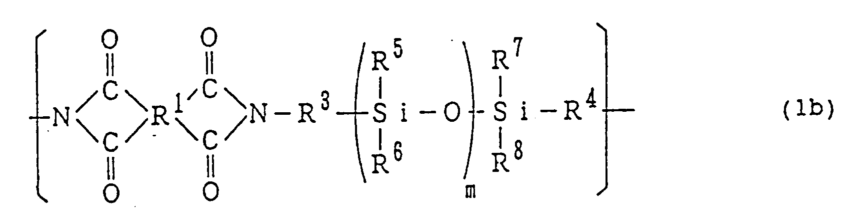 (wherein R¹ is an organic group such as a tetravalent carbon cyclic aromatic group or a heterocyclic group; R² is a divalent organic group such as an aliphatic group of two or more carbon atoms , an alicyclic group, a carbon cyclic aromatic group, a heterocyclic group or a polysiloxane group; R¹ or R² may be substituted by a halogen atom or one or more alkylene groups having 1 to 4 carbon atoms; R³ and R⁴ may be identical or different, and each of them is an alkylene group having 1 to 6 carbon atoms or a phenylene group; R⁵, R⁶, R⁷ and R⁸ may be identical or different and each of them is an alkyl group having 1 to 6 carbon atoms, an alkoxy group having 1 to 6 carbon atoms, a phenyl group or a phenoxy group; and m is an integer of 1 to 100) , wherein the ratio of the absorbance N₁ of the absorption spectrum of the film surface layer at 1074 cm⁻¹ on the basis of Si-O to the absorbance N₂ of the absorption spectrum at 824 cm⁻¹ on the basis of a benzene ring in an infrared absorption spectrum of the film surface is 0.7 or less.

2. A process for producing a silicone-modified polyimide film according to claim 1 having improved adhesive properties which comprises the step of subjecting a polyimide film comprising a silicone-modified polyimide or a composite of the silicone-modified polyimide and an aromatic polyimide as defined in claim 1 to a corona discharge treatment of 2500 to 87000 W. min./m².

## Patentansprüche

1. Silikon-modifizierter Polyimidfilm, der verbesserte Adhäsionseigenschaften aufweist und ein Silikon-modifiziertes Polyimid oder einen Kompositstoff aus einem Silikon-modifizierten Polyimid und einem aromatischen Polyimid umfaßt, wobei besagtes Silikon-modifizierte Polyimid 0 bis 90 Mol% einer Struktureinheit, die durch die Formel (1a) dargestellt ist, 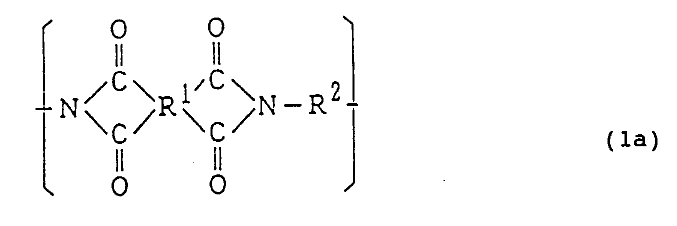 und 10 bis 100 Mol% einer Struktureinheit, die durch die Formel (1b) dargestellt ist, umfaßt 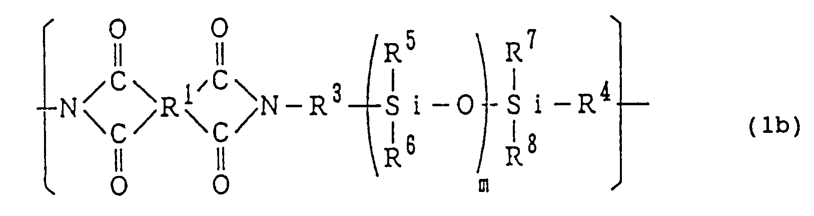 (in denen R¹ eine organische Gruppe wie eine vierwertige zyklische aromatische Kohlenstoffgruppe oder eine heterozyklische Gruppe ist; R² ist eine zweiwertige organische Gruppe wie eine aliphatische Gruppe mit zwei oder mehr Kohlenstoffatomen, eine alizyklische Gruppe, eine zyklische aromatische Kohlenstoffgruppe, eine heterozyklische Gruppe oder eine Polysiloxangruppe; R¹ oder R² können durch ein Halogenatom oder eine oder mehrere Alkylengruppen mit 1 bis 4 Kohlenstoffatomen substituiert sein; R³ und R⁴ können identisch oder verschieden sein, und jede von ihnen ist eine Alkylengruppe mit 1 bis 6 Kohlenstoffatomen oder eine Phenylengruppe; R⁵, R⁶, R⁷ und R⁸ können identisch oder verschieden sein und jede von ihnen ist eine Alkylgruppe mit 1 bis 6 Kohlenstoffatomen, eine Alkoxygruppe mit 1 bis 6 Kohlenstoffatomen, eine Phenylgruppe oder eine Phenoxygruppe; und m ist eine Zahl von 1 bis 100), wobei das Verhältnis der Absorbanz N₁ des Absorptionsspektrums der Filmoberflächenschicht bei 1074 cm⁻¹ auf der Basis von Si-O zu der Absorbanz N₂ des Absorptionsspektrums bei 824 cm⁻¹ auf der Basis eines Benzolrings in einem Infrarot-Absorptionsspektrum der Filmoberfläche 0,7 oder weniger ist.

2. Verfahren zur Herstellung eines Silikon-modifizierten Polyimidfilms nach Anspruch 1, der verbesserte Adhäsionseigenschaften aufweist, das den Schritt umfaßt, einen Polyimidfilm, der ein Silikon-modifiziertes Polyimid oder einen Kompositstoff des Silikon-modifizierten Polyimids und eines aromatischen Polyimids, wie in Anspruch 1 definiert, umfaßt, einer Koronaentladungs-Behandlung von 2500 bis 87000 W. Min./m² zu unterwerfen.

## Revendications

1. Film de polyimide modifié par du silicium ayant de meilleures propriétés adhésives et comprenant un polyimide modifié par du silicium, ou un composite de polyimide modifié par du silicium et d'un polyimide aromatique, dans lequel ledit polyimide modifié par du silicium comprend 0 à 90 moles % d'un motif structurel représenté par la formule (1a) 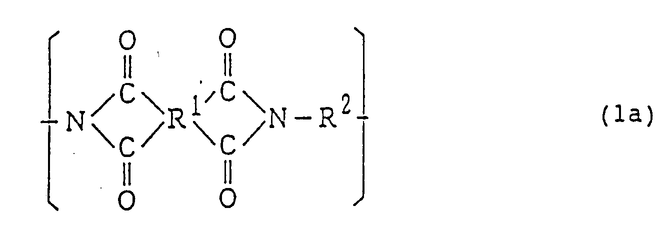 et 10 à 100 moles % d'un motif structurel représenté par la formule (1b) 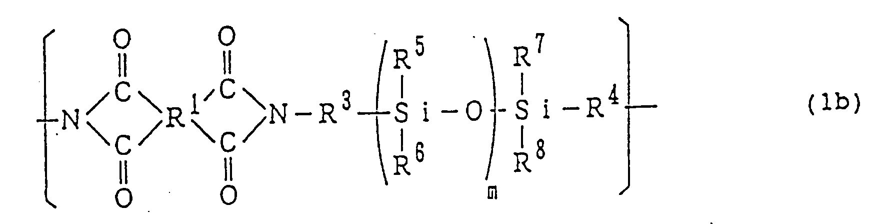 (dans lesquelles R¹ est un groupe organique tel qu'un groupe aromatique cyclique de carbone tétravalent ou un groupe hétérocyclique; R² est un groupe organique divalent tel qu'un groupe aliphatique de deux ou plusieurs atomes de carbone, un groupe alicyclique, un groupe aromatique cyclique de carbone, un groupe hétérocyclique ou un groupe polysiloxane; R¹ ou R² peuvent être substitués par un atome d'halogène ou un ou plusieurs groupes alkylène ayant 1 à 4 atomes de carbone; R³ et R⁴ peuvent être identiques ou différents, et chacun d'eux est un groupe alkylène ayant 1 à 6 atomes de carbone ou un groupe phénylène; R⁵, R⁶, R⁷ et R⁸ peuvent être identiques ou différents et chacun d'eux est un groupe alkyle ayant 1 à 6 atomes de carbone, un groupe alcoxy ayant 1 à 6 atomes de carbone, un groupe phényle ou un groupe phénoxy; et m est un nombre entier de 1 à 100), où le rapport entre l'absorbance N₁ du spectre d'absorption de la couche superficielle du film à 1074 cm⁻¹ sur la base de Si-O et l'absorbance N₂ du spectre d'absorption à 824 cm⁻¹ sur la base d'un cycle benzène dans un spectre d'absorption de l'infrarouge de la surface du film est 0,7 ou moins.

2. Procédé pour préparer un film de polyimide modifié par du silicium selon la revendication 1, ayant de meilleures popriétés adhésives qui comprend l'étape consistant à soumettre un film de polyimide comprenant un polyimide modifié par du silicium ou un composite du polyimide modifié par du silicium et d'un polyimide aromatique comme défini en revendication 1 à un traitement de décharge par effet couronne de 2 500 à 87 000 W. min/m².
